# EUROPEAN PATENT SPECIFICATION

(11) **EP 0 381 889 B1**
(45) Date of publication and mention of the grant of the patent: **04.05.1994**
(21) Application number: 89311595.6
(22) Date of filing: 09.11.1989
(51) Int. Cl.: B60R 13/04, B60R 13/06

(54) **Laminate flexible strip and method for making same**
Flexible biegsame Zierleiste mit Schichtaufbau und deren Herstellungsverfahren
Baguette flexible stratifiée et son mode de fabrication

(30) Priority: 06.02.1989 US 307346
(43) Date of publication of application: 16.08.1990
(73) Proprietor: THE STANDARD PRODUCTS COMPANY, Cleveland Ohio 44102 (US)
(72) Inventor: Keys, James Frederick, West Bloomfield Michigan 48322 (US)
(74) Representative: Jones, Michael Raymond

(56) References cited:
- DE-A- 2 030 801
- DE-A- 2 703 254
- US-A- 4 710 416
- PATENT ABSTRACTS OF JAPAN vol. 7, no. 98 (M-210)(1243) 26 April 1983;& JP-A-58 20541 (TOYODA GOSEI K.K.) 07 February 1983
- PATENT ABSTRACTS OF JAPAN vol. 7, no. 47 (M-196)(1192) 24 February 1983;& JP-A-57 195967 (KINOGAWA GOMU KOGYO K.K.) 01 December 1982

## Description

The present invention relates to a laminate flexible strip. More particularly, the present invention relates to trim strips adapted to automotive vehicles.

Laminated trim strips have been used in the past to act as a sealing strip around a door in a vehicle. Typically, the trim strip comprises a core member having a cover layer disposed about the core member. Examples of such trim strips are disclosed in US-A-3 197 821 US-A-3 310 928 and US-A-4 413 033.

The problem with such trim strips is that the core member may be flexible in only one direction, such as longitudinally, Also, woven wire cores must use non-functional wire connecting loops. Similarly, stamped cores may waste up to 50% of the material in slug loss and non-functional connecting strips. This results in less than 100% material utilization. Further, the core members are complex and costly manufacture.

Patent Abstracts of Japan Vol. 7, No. 47 (M-196) (1192) relating to JP-A-57195967 discloses a core member according to the preamble of claim 1, having longitudinally spaced and laterally extending metal supporting pieces and a pair of laterally spaced and longitudinally extending coupling bodies which are attached to the supporting pieces by an adhesive which is temperature sensitive and broken down upon heating.

Patent Abstracts of Japan Vo. 7, No. 98 (M-210 (1243) relating to JP-A-5820541 discloses a rubber trim for automobiles having a cloth-like core member formed from longitudinally spaced and laterally extending reinforcing materials (e.g. glass fibre or carbon fibre) and laterally spaced and longitudinally extending connecting members (e.g. of glass single yarn, or cotton yarn). The components of the core member are strengthened by being impregnated with a thermosetting resin. The core member is then coated with a rubber cover layer and bent into shape.

US-A-4 710 416 discloses a trim having a core member formed from a plurality of longitudinally spaced and laterally extending metal core segments connected by laterally spaced and longitudinally extending strips of adhesive tape, which may be positioned on one or both sides of the core segments. The core member is then covered by a rubber or synthetic resin outer casing and bent into shape.

DE-A-2 030 801 discloses a trim strip having a wire structure for a core member which is formed by longitudinally spaced and laterally extending weft wires and longitudinally extending warp wires which weave in and out along the centre of the weft wires leaving their edges free (to thereby give greater flexibility to the structure). The weft wires are provided with a plastics coating into which the warp wires are fixed. The wire structure is then provided with a cover layer and bent into shape.

According to the present invention there is provided a flexible strip for attachment to a vehicle which comprises a core member bent to a predetermined configuration and a cover layer disposed about the core member, wherein the core member comprises a plurality of longitudinally spaced and laterally extending clamping clips and a plurality of laterally spaced and longitudinally extending linear fibres connected to the clips which allow the core member to flex longitudinally and laterally, the arrangement being such that a first plurality of apertures is formed between the clips and a second plurality of apertures is formed between the fibres, characterized in that the strip further includes a filler filling the first and second plurality of apertures so that the core member has a substantially smooth continuous outer surface.

According to the present invention there is also provided a method of making a flexible strip according to the invention which method comprises the steps of
forming a plurality of laterally spaced fibres;
forming a plurality of longitudinally spaced clamping clips;
assembling the fibres and clips to form a core member capable of flexing longitudinally and laterally, in which the clips are longitudinally spaced and laterally extending and the fibres are laterally spaced and longitudinally extending so that a first plurality of apertures is formed between the clips and a second plurality of apertures is formed between the fibres;
filling the apertures between the clips and between the fibres so that the core member has a substantially smooth continuous outer surface; and
extruding a cover layer about the core member.

A laminate flexible strip includes a core member having a cover layer disposed about the core member. The core member comprises a plurality of longitudinally spaced clamping clips and a plurality of laterally spaced fibers attached to the clips to allow the core to flex longitudinally and laterally.

Accordingly, the present invention allows the core member to flex longitudinally and laterally. Also, the core member has 100% material utilization. Further, the core member of the present invention is simpler and less expensive to manufacture than conventional cores.

Other advantages of the present invention will be readily appreciated as the same becomes better understood by reference to the following detailed description when considered in connection with the accompanying drawings wherein:
Figure 1 is a partial fragmentary view of one embodiment of the present invention; and
Figure 2 is a schematic drawing illustrating the method of making a strip according to the present invention; eg the embodiment of Figure 1.

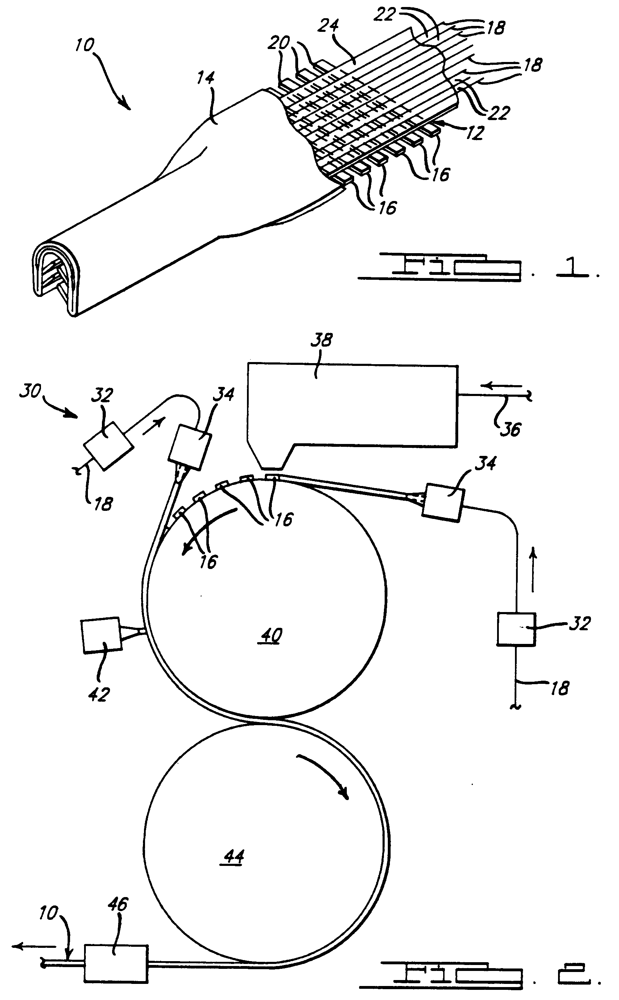

A laminate flexible strip for attachment to a vehicle (not shown) is generally shown at 10 in Figure 1. The strip 10 comprises a core member generally indicated at 12, and a cover layer 14 of elastomeric material disposed about the core member 12. The core member 12 comprises a plurality of discontinuous or non-connected longitudinally spaced and laterally extending metal clamping clips 16 and a plurality of continuous laterally spaced and longitudinally extending linear fibres 18 connected to the clips 16 to allow the core 12 to flex longitudinally and laterally. The fibres 18 may be made of a material dissimilar from the clips 16.

The core member 12 includes first apertures 20 between the clips 16 and second apertures 22 formed between the fibres 18. The clips 16 are secured to the fibres 18 by an adhesive potting laminate. A filler material 24 is filled in the first 20 and second 22 apertures to present a smooth, continuous outer surface on the cover layer 14. In other words, the filler material 24 is disposed in the first 20 and second 22 apertures to eliminate a "hungry horse" effect on the outer surface of the cover layer 14 by the cover layers 14 sinking into the apertures 20, 22 when the core member 12 is formed or bent to a predetermined configuration such as a "U" shape.

As mentioned above, a method of making a laminate flexible strip 10 for attachment to a vehicle is provided. An apparatus for performing the method is generally shown at 30 in Figure 2. The method comprises the steps of forming a core member 12 comprising a plurality of laterally spaced fibres 18 and a plurality of longitudinally spaced clamping clips 16. The steps include forming a cover layer 14 about the clips 16 and fibres 18 to form a strip 10 which is flexible longitudinally and laterally. More specifically, the steps include tensioning the fibres 18 in die 32 and extruding the fibres 18 by a fibre-coating cross-head extrusion 34. The steps further include feeding a metal stock 36 such as a strip to a cutting device 38 and cutting the stock 36 to a predetermined length with the cutting device 38 to form the clips 16. The steps include feeding the clips 16 to a magnetic roller 40. The clips 16 are held to the roller 40 by magnetic attraction. The roller 40 rotates as the fibres 18 are extruded and placed on the clips 16. The steps further include filling apertures 20, 22 between the clips 16 and fibres 18 by extruding a filler material 24 from die 42. The filler material 24 is formed to the proper thickness between the roller 40 and a rotating gauge roller 44. The core 12 is temperature conditioned at 46. Finally, the steps include extruding an elastomeric cover layer 14 about the clips 16 and fibres 18.

## Claims

1. A flexible strip (1) for attachment to a vehicle which comprises a core member (12) bent to a predetermined configuration and a cover layer (14) disposed about the core member, wherein the core member comprises a plurality of longitudinally spaced and laterally extending clamping clips (16) and a plurality of laterally spaced and longitudinally extending linear fibres (18) connected to the clips which allow the core member to flex longitudinally and laterally, the arrangement being such that a first plurality of apertures (20) is formed between the clips and a second plurality of apertures (22) is formed between the fibres, characterized in that the strip further includes a filler material (24) filling the first and second plurality of apertures so that the core member has a substantially smooth continuous outer surface.

2. A strip according to claim 1, which further includes securing means for securing the clamping clips to the fibres.

3. A strip according to claim 1 or 2, wherein the clips are made of a material dissimilar from that of the fibres.

4. A strip according to any preceding claim, wherein the cover layer is made of an elastomeric material.

5. A method of making a flexible strip for attachment to a vehicle according to any one of claims 1 to 4, which method comprises the steps of:
forming a plurality of laterally spaced fibres;
forming a plurality of longitudinally spaced clamping clips;
assembling the fibres and clips to form a core member capable of flexing longitudinally and laterally, in which the clips are longitudinally spaced and laterally extending and the fibres are laterally spaced and longitudinally extending so that a first plurality of apertures is formed between the clips and a second plurality of apertures is formed between the fibres;
filling the apertures between the clips and between the fibres so that the core member has a substantially smooth continuous outer surface; and
extruding a cover layer about the core member.

6. A method according to claim 5, wherein the fibres are formed by tensioning followed by extrusion.

7. A method according to claim 5 or 6, wherein the clips are formed by cutting a metal stock into predetermined lengths and wherein the process includes the step of feeding the clips to a magnetic roller by which they are held during manufacture of the core member.

8. A method according to claim 5, 6 or 7, which includes the further step of bending the core member to a predetermined shape.

## Patentansprüche

1. Flexible Leiste (1) zur Befestigung an einem Fahrzeug, mit einem Kernteil (12), das in eine vorgegebene Form gebogen ist, und einer Deckschicht (14), die um das Kernteil herum angeordnet ist, wobei das Kernteil eine Anzahl von in Längsrichtung beabstandeten und quer verlaufenden Clips (16) und mehrere in Querrichtung beabstandete und in Längsrichtung verlaufende lineare Fasern (18) aufweist, die mit den Clips verbunden sind, welche ein Verbiegen des Kernteils in Längsrichtung und Querrichtung ermöglichen, wobei die Anordnung so getroffen ist, daß eine erste Anzahl von Öffnungen (20) zwischen den Clips gebildet ist und eine zweite Anzahl von Öffnungen (22) zwischen den Fasern gebildet ist, dadurch gekennzeichnet, daß die Leiste ferner ein Füllmaterial (24) enthält, das die erste und zweite Anzahl von Öffnungen füllt, so daß das Kernteil eine im wesentlichen glatte kontinuierliche Außenfläche besitzt.

2. Leiste nach Anspruch 1, die ferner Befestigungsmittel zum Befestigen der Clips an den Fasern enthält.

3. Leiste nach Anspruch 1 oder 2, bei der die Clips aus einem vom Material der Fasern verschiedenen Material hergestellt sind.

4. Leiste nach einem der vorhergehenden Ansprüche, bei der die Deckschicht aus einem elastomeren Material hergestellt ist.

5. Verfahren zum Herstellen einer flexiblen Leiste zur Befestigung an einem Fahrzeug gemäß einem der Ansprüche 1 bis 4, welches Verfahren die folgenden Schritte umfaßt:
Herstellen einer Anzahl von in Querrichtung beabstandeten Fasern;
Herstellen einer Anzahl von in Längsrichtung beabstandeten Clips;
Zusammensetzen der Fasern und Clips zur Herstellung eines Kernteils, das in Längsrichtung und Querrichtung flexibel ist, wobei die Clips in Längsrichtung beabstandet sind und in Querrichtung verlaufen und die Fasern in Querrichtung beabstandet sind und in Längsrichtung verlaufen, so daß eine erste Anzahl von Öffnungen zwischen den Clips und eine zweite Anzahl von Öffnungen zwischen den Fasern gebildet wird;
Füllen der Öffnungen zwischen den Clips und zwischen den Fasern, so daß das Kernteil eine im wesentlichen glatte kontinuierliche Außenfläche besitzt; und
Extrudieren einer Deckschicht um das Kernteil.

6. Verfahren nach Anspruch 5, bei dem die Fasern durch Unterspannungsetzen und anschließendes Extrudieren hergestellt werden.

7. Verfahren nach Anspruch 5 oder 6, bei dem die Clips in der Weise gebildet werden, daß metallisches Material in vorgegebene Längen geschnitten wird, und bei denen die Clips einer magnetischen Rolle zugeführt werden, von der sie während der Herstellung des Kernteils gehalten werden.

8. Verfahren nach Anspruch 5, 6 oder 7, bei dem das Kernteil in eine vorgegebene Form gebogen wird.

## Revendications

1. Baguette flexible (1) destinée à être fixée à un véhicule qui comprend une partie centrale (12) courbée en une configuration prédéterminée et une couche de revêtement (14) disposée autour de la partie centrale, dans laquelle la partie centrale comprend une pluralité d'attaches de fixation (16) s'étendant latéralement et espacées longitudinalement et une pluralité de fibres linéaires (18) s'étendant longitudinalement et espacées latéralement reliées aux attaches qui permettent à la partie centrale d'être flexible longitudinalement et latéralement, la disposition étant de telle sorte qu'une première pluralité d'ouvertures (20) est formée entre les attaches et une seconde pluralité d'ouvertures (22) est formée entre les fibres, caractérisée en ce que la baguette comprend de plus un matériau de remplissage (24) remplissant les première et seconde pluralités d'ouvertures de sorte que le partie centrale comporte une surface extérieure continue pratiquement uniforme.

2. Baguette selon la revendication 1, qui comprend de plus des moyens de fixation afin de fixer les attaches de fixation aux fibres.

3. Baguette selon la revendication 1 ou 2, dans laquelle les attaches sont faites d'un matériau différent de celui des fibres.

4. Baguette selon l'une quelconque des revendications précédentes, dans lesquelles la couche de revêtement est constituée d'un élastomère.

5. Procédé de fabrication d'une baguette flexible destinée à être fixée à un véhicule conformément à l'une quelconque des revendications 1 à 4, lequel procédé comprend les étapes consistant à :
former une pluralité de fibres espacées latéralement ;
former une pluralité d'attaches de fixation espacées longitudinalement ;
assembler les fibres et les attaches afin de former une partie centrale pouvant être fléchie longitudinalement et latéralement, dans laquelle les attaches sont espacées longitudinalement et s'étendent latéralement ainsi que les fibres sont espacées latéralement et s'étendent longitudinalement de sorte qu'une première pluralité d'ouvertures est formée entre les attaches et une seconde pluralité d'ouvertures est formée entre les fibres ;
remplir les ouvertures entre les attaches et entre les fibres de sorte que la partie centrale comporte une surface extérieure continue pratiquement uniforme, et
extruder une couche de revêtement autour de la partie centrale.

6. Procédé selon la revendication 5, dans lequel les fibres sont formées par étirage suivi d'une extrusion.

7. Procédé selon la revendication 5 ou 6, dans lequel les attaches sont formées par découpage d'une barre de métal en des longueurs prédéterminées et dans lequel le procédé comprend l'étape d'avancement des attaches vers un rouleau magnétique sur lequel elles sont maintenues pendant la fabrication de la partie centrale.

8. Procédé selon la revendication 5, 6 ou 7, qui comprend d'autres étapes de courbure de la partie centrale en une forme prédéterminée.
